# EUROPEAN PATENT SPECIFICATION

(11) **EP 4 356 176 B1**
(45) Date of publication and mention of the grant of the patent: **11.03.2026**
(21) Application number: 22720490.6
(22) Date of filing: 29.04.2022
(51) Int. Cl.: G02B 6/44, G02B 6/02

(54) **DEVICE AND METHOD FOR TERMINATING OPTICAL FIBRE CABLES**
VORRICHTUNG UND VERFAHREN ZUM ANSCHLIESSEN VON LICHTWELLENLEITERKABELN
DISPOSITIF ET PROCÉDÉ DE TERMINAISON DE CÂBLES À FIBRE OPTIQUE

(30) Priority: 17.06.2021 GB 202108640
(43) Date of publication of application: 24.04.2024
(73) Proprietor: Microsoft Technology Licensing, LLC, Redmond, WA 98052-6399 (US)
(72) Inventor: LANG, Ian Dewi, Romsey Hampshire SO51 9DL (GB); HARKER, Andrew Thomas, Romsey Hampshire SO51 9DL (GB); STROUD, John R, Romsey Hampshire SO51 9DL (GB)
(74) Representative: CMS Cameron McKenna Nabarro Olswang LLP
(86) International application number: PCT/GB2022/051094
(87) International publication number: WO 2022/263788

(56) References cited:
- DE-A1- 2 638 110
- DE-A1- 3 401 047
- DE-A1- 3 624 514
- JP-A- 2002 131 599
- US-A- 6 035 090

## Description

### BACKGROUND OF THE INVENTION

The present invention relates to devices and methods for terminating optical fibre cables.

Optical fibres are widely used for the transmission of data carried by optical signals, with multiple fibres used to carry separate data channels in parallel. For convenience and protection, the multiple fibres are commonly bundled together inside a protective outer jacket, to form an optical fibre cable.

Cables are installed in a variety of environments to carry data between transmitting and receiving locations, over large and small distances, and both underground and within buildings. Frequently, a cable will be deployed through a duct or pipe, with the individual fibres connected at each end of the cable by splicing to a further cable or relevant optical apparatus. Cable deployment and cable splicing require different techniques, and may be carried out by different individuals having the necessary skills. For example, a deployment person or team may install a cable through an underground duct from a data centre to a building, where a splicing person or team will take over to push the cable into the building and then handle the fibres within the cable. There may be a delay between these two stages, so that the deployment team are required to sever a deployed cable to a required length and leave it stored ready to be taken up by a splicing team at a later time.

It is desirable to protect the end of the cable after it has been severed, in order to exclude contaminants. While of general relevance, this is of particular significance when the cable includes fibres having voids within the fibre structure into which contaminants may enter. These include, but are not limited to, hollow core fibres and fibres with microstructured cladding. One way to avoid contamination is to seal the ends of the individual fibres by the application of heat to melt the glass from which the fibres are made, causing the ends to close. This can be carried out using a fibre splicing machine, but these devices, which are costly and require electrical power, are not generally carried by a cable deployment team. Hot melt glue or a ultraviolet curable solution may alternatively be applied to the fibre ends, but these also require dedicated electrical equipment not otherwise used in cable deployment. The sealed fibre end may additionally be packaged in a protective casing, again requiring equipment and skill. Further, the number of fibres typically included in a cable makes these approaches unattractive. Dealing with a single fibre may take about fifteen minutes, and a cable may include 4, 16, 32 or more fibres. Also, a packaged fibre end is relatively bulky, so that when applied to all fibres in a cable, the end result is an unwieldy, lengthy and delicate tail of fibres protruding from the cable jacket, which is not suitable for techniques that may be used for further installation of the cable.

Accordingly, in a real world situation, these approaches are not generally adopted, and cruder methods are used to protect the cut end of an optical fibre cable. Electrical insulation tape or similar may be bound around the cable end, providing only an ineffective barrier against contaminants. Cable manufacturers may supply plastic end caps intended to be fitted over a severed cable end, but these are small items that tend to be lost, and also offer only a poor seal.

Therefore, approaches that improve the sealing of optical fibre cable ends in order to protect microstructured fibres with internal voids are of interest.

DE 3624514 A1 describes using a device for the tension-resistant capping of cables, especially coaxial cables or optical-fibre cables, having subregions which can shrink and consist of plastic whose shape can be restored by heat, and having a tension eye, whereby it is intended to create a solution which is simple in terms of assembly, is cost-effective in production and is equally suitable for connecting cables to a tension element of a tension eye such that the required forces can be absorbed. This is achieved in that subregions of the cap inner surface which rests on the cable sheath have a shape which increases the contact between the cap and the cable sheath.

DE 3401047 A1 describes high-tension and moisture-proof capping of an optical fibre cable or coaxial cable which has a pressing-tension anchor. On its rear part, the pressing-tension anchor has a truncated cone with an external thread and an externally located two-edged element, in its central region it has a pressing body, and in its front part it has a pulling head with an internal truncated cone and an internal thread. A shrink sleeve is arranged over the pressing-tension anchor and the cable sheath.

### SUMMARY OF THE INVENTION

The invention is set out in the appended set of claims.

Aspects and embodiments are set out in the appended claims.

According to a first aspect of certain embodiments described herein, there is provided a terminator for an optical fibre cable according to claim 1.

According to a second aspect of certain embodiments described herein, there is provided an optical fibre according to claim 11.

According to a third aspect of certain embodiments described herein, there is provided a kit for forming a terminator for an optical fibre cable according to claim 12.

According to a fourth aspect of certain embodiments described herein, there is provided a method of terminating an optical fibre cable according to claim 13.

These and further aspects of certain embodiments are set out in the appended independent and dependent claims. It will be appreciated that features of the dependent claims may be combined with each other and features of the independent claims in combinations other than those explicitly set out in the claims. Furthermore, the approach described herein is not restricted to specific embodiments such as set out below, but includes and contemplates any appropriate combinations of features presented herein. For example, methods and devices may be provided in accordance with approaches described herein which include any one or more of the various features described below as appropriate.

### BRIEF DESCRIPTION OF THE DRAWINGS

For a better understanding of the invention and to show how the same may be carried into effect reference is now made by way of example to the accompanying drawings in which:
Figure 1 shows a schematic longitudinal cross-sectional view through a first example of an optical fibre cable with a severed end to which embodiments of the disclosure are applicable;
Figure 2 shows a schematic longitudinal cross-sectional view through a second example of an optical fibre cable with a severed end to which embodiments of the disclosure are applicable;
Figure 3 shows a schematic longitudinal cross-sectional view of an example terminator useful for understanding the claimed invention;
Figure 4 shows a schematic longitudinal partial cross-sectional view of the terminator of Figure 3 fitted to the severed end of an optical fibre cable;
Figure 5 shows a schematic longitudinal partial cross-sectional view of a severed end of an optical fibre cable engaged with an example terminating member of a terminator;
Figure 6 shows a schematic longitudinal partial cross-sectional view of a severed end of an optical fibre cable engaged with another example terminating member of a terminator;
Figure 7 shows a schematic longitudinal partial cross-sectional view of a severed end of an optical fibre cable engaged with an example terminating member of a terminator according to an embodiment of the disclosure;
Figure 8 shows a schematic longitudinal partial cross-sectional view of another example terminator fitted to a severed end of an optical fibre cable;
Figure 9 shows a flow chart of steps in an example method of fitting a terminator according to an example embodiment of the disclosure to a severed end of an optical fibre cable;
Figure 10 shows a schematic longitudinal cross-sectional view of a further example terminator; and
Figure 11 shows a schematic longitudinal cross-sectional view of an example terminator installed according to another example method of the disclosure.

### DETAILED DESCRIPTION

Aspects and features of certain examples and embodiments are discussed / described herein. Some aspects and features of certain examples and embodiments may be implemented conventionally and these are not discussed / described in detail in the interests of brevity. It will thus be appreciated that aspects and features of devices and methods discussed herein which are not described in detail may be implemented in accordance with any conventional techniques for implementing such aspects and features.

The devices and methods described herein are particularly applicable to optical fibre cables containing one or more microstructured optical fibres, which are discussed in more detail below. An optical fibre cable comprises a plurality of optical fibres arranged in parallel in a bundle which is surrounded by an outer protective layer such as a jacket or sheath. The jacket may be formed, for example, from a polymer material, a low smoke zero halogen (LS0H or LSZH) material, or stainless steel tubing. The jacket may house the optical fibres only, or in some examples other elements may be included to make the cable more robust and resistant to damage. These may include a central strength member (CSM) made from a high tensile strength material such as glass reinforced plastic (GRP), fibre reinforced plastic (FRP), stranded steel, nylon or para-aramid yarn that runs the length of the cable to resist tight bending and potential damage to the optical fibres, and around which the optical fibres are arranged, bunched, wrapped, wound or twisted, and one or more buffer layers of polymer material to secure and protect individual or grouped fibres. Strength members that surround the fibres, such as in the form of a layer between the fibre bundle and the jacket, may also be used.

An optical fibre cable may comprise optical fibres of any type or design, including two or more types in one cable. It is generally desirable to reduce or prevent the ingress of contaminants via a cut or severed end of the cable where the interior of the cable and the fibres are exposed. More specifically, when a cable includes microstructured fibres, having voids within the internal structure of the fibre, it is desirable to reduce the ingress of contaminants into the individual fibres, since the presence of contaminants within the fibres may reduce their optical performance. A portion of cable may be removed to dispose of a potentially contaminated end part, but this is wasteful and undesirable. Accordingly, the present disclosure proposes devices and methods for terminating optical fibre cable ends in a protective manner that inhibits contamination of the fibres, and more generally also of the cable.

As noted, protection of an exposed cable end is of particular interest where the optical fibre cable includes one or more microstructured fibres. Herein, this term is used to indicate any optical fibre that has one or more internal longitudinal voids, where the voids may define or form part of the fibre core, the fibre cladding, or both. In more detail, microstructured fibres have an internal structure comprising an array or arrangement of holes, capillaries or lumens within the fibre material, extending along the length of the fibre parallel to the longitudinal axis and defined within a material such as glass. The arrangement of holes can be termed a microstructure, and typically the microstructure forms at least part of the cladding of the fibre, and may additionally or alternatively define the core.

The latter configuration can provide a hollow core optical fibre, in which a microstructured cladding surrounds a central hollow void or region that provides a light-guiding core. The capillaries of the microstructure are typically supported within a larger outer cladding tube made from glass. The propagation of light in air (or other gas, or a vacuum) enabled by the absence of a solid glass core reduces the proportion of a guided optical wave which propagates in glass compared with a solid core fibre, offering benefits such as increased propagation speed, reduced loss from both absorption and scattering, and reduced nonlinear interactions. Hence hollow core fibres are very attractive for telecommunications applications; they enable data transmission at nearly the speed of light in vacuum, and at higher optical powers and over broader optical bandwidths, with relative freedom from issues such as nonlinear and thermo-optic effects that can affect light travelling in solid fibres. Hollow core fibres can be categorised according to their mechanism of optical guidance into two principal classes or types: hollow core photonic bandgap fibre (HCPBF, alternatively referred to as hollow core photonic crystal fibre, HCPCF), and antiresonant hollow core fibre (AR-HCF or ARF). In HCPBF, a structured cladding region comprises a regular closely packed array of many small glass capillaries, from which a central group is excluded to define a substantially circular hollow core. The periodicity of the cladding structure provides a substantially periodically structured refractive index and hence a photonic bandgap effect that confines the propagating optical wave towards the core. In ARF, the structured cladding comprises a much lower number of larger glass capillaries or tubes with a structure lacking a high degree of periodicity so that photonic bandgap effects are not significant, but with some periodicity on a larger scale since the tubes are evenly spaced. The structure provides antiresonance for propagating wavelengths which are not resonant with a wall thickness of the cladding capillaries, where the cladding capillaries surround a central void or cavity which provides the hollow core of the fibre, and which is able to support antiresonantly-guided optical modes.

The present disclosure is applicable to all types of microstructured fibre, including the two main classes of hollow core fibre and sub-types associated therewith, plus other hollow core designs. Other examples include microstructured solid core fibres, where the structure of voids is provided in the cladding region only, around a core defined in solid material. The cladding may be an array of many capillaries to provide photonic effects, or a single ring of larger voids separated by struts of glass that support the central solid core (suspended core fibres). All other designs of optical fibre with one or more internal voids are also relevant. Note that in the art, there is some overlapping use of terminologies for the various classes of microstructured or "holey" fibres. For the purposes of the present disclosure, the term "microstructured fibre" is intended to cover all types having a longitudinal void or voids in the internal structure, and the terms "hollow core fibre" and "hollow core microstructured fibre" are intended to cover all types of these fibres having a hollow core as described above. Remarks made with particular reference to hollow core fibres are to be understood as applicable to all microstructured fibres, unless the context indicates otherwise.

The structural voids in hollow core fibres and other microstructured fibres make these types of fibre particularly vulnerable to the ingress of contaminants, which can enter the voids through an exposed and open end of the fibre such as arises when an optical fibre cable is cut. Contaminants can reduce fibre performance by causing optical loss. While a contaminated end portion of a cable can be cut away, as noted above, this is particularly unattractive for hollow core fibres, which have a higher cost than conventional solid core fibre owing to increased manufacturing complexity. Contaminants of concern for microstructured fibre, which if present can cause optical loss and increased attenuation, include particulate matter, water (as a vapour or a liquid), and carbon dioxide. Water ingress can occur as longitudinal penetration via an open end of a cable or fibre, or as radial permeation where water vapour can be absorbed through the cable jacket and any fittings. Techniques for fibre protection described herein can address both these contamination pathways.

Note that the approaches described herein, while of particular relevance for cables comprising microstructured fibres, may also be applied to cables with conventional solid core optical fibres.

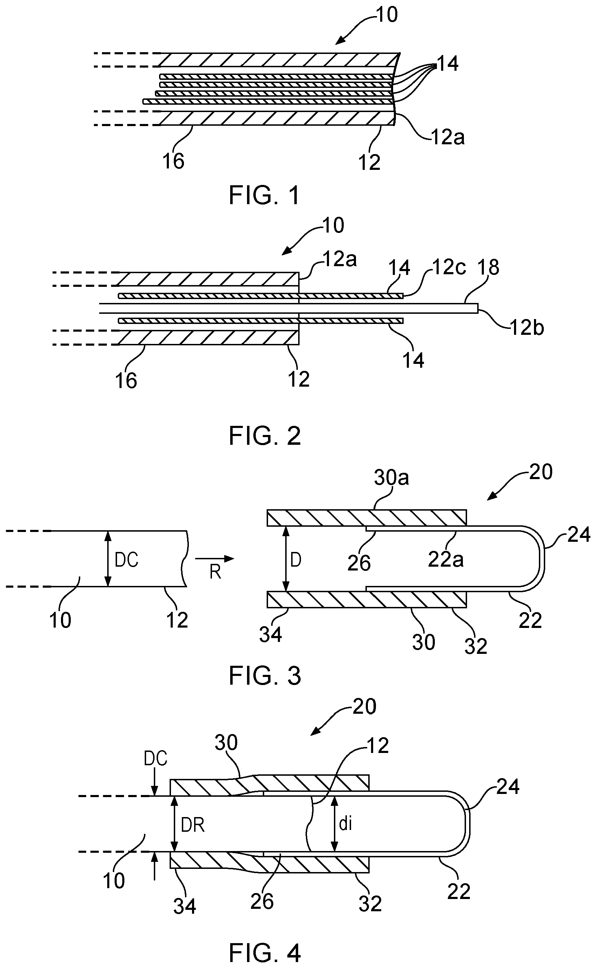

Figure 1 shows a schematic longitudinal cross-sectional view through a first example of an optical fibre cable to which embodiments of the disclosure are applicable. The optical fibre cable 10, of which an end part or portion is shown, has been cut or severed to give a severed end 12 with an end surface 12a via which the interior of the cable, and importantly also the interior of microstructured fibres in the cable 10, are open or exposed. In the field, installation or reconfiguration of an optical fibre cable 10 may include rough and ready cutting of the cable 10 using shears, scissors, a knife, or other blade or similar, so that the end surface 12a is likely rough and not clean or neat. The cable 10 comprises a plurality of optical fibres 14, represented in this example by four fibres, but which may be any number such as 2, 8, 16, 24, 48, or more or fewer. Also, a cable with a single optical fibre is not excluded. The optical fibres 14 may be of any type including solid core and hollow core, or a mixture of types in one cable, but the intention is that embodiments of the invention are of particular benefit for microstructured fibres of all kinds. In general, each optical fibre 14 within the cable 10 will comprise a core surrounded by cladding, the cladding surrounded by a protective layer or coating. The optical fibres 14 are grouped or bundled together so as to extend lengthwise along the cable 10 in a generally parallel arrangement. The term "parallel" merely indicates that the optical fibres 14 are longitudinally side-by-side, and does not require that the individual fibres are straight; within a real cable the fibres may be twisted around each other or around other elements in the cable (not shown in this example). The optical fibres 14 may be in a single bundle, or may be grouped into smaller bundles which are in turn bundled together. Buffer layers (not shown) may be included around all the fibres, around individual fibres, or around groups of fibres. The cable 10 additionally comprises an outer protective layer or jacket 16 which has a tubular shape that surrounds and tightly encloses the bundle of optical fibres 14 in order to protect them from external damaging factors and to make the bundle more manageable and secure. The jacket 16 may be made from a polymer material such as polyethylene or polyvinyl chloride. The outer width or diameter of jacket 16 and hence of the cable 10 overall is typically in the range of 5 mm to 20 mm, such as 8 mm to 10 mm; however, the disclosure is applicable to all widths of cable. In this example, the optical fibre cable 10 has been cut through along a single cut line so that the jacket 16 and the fibres 14 are all terminated at the same end surface 12a of the severed end 12.

Figure 2 shows a schematic longitudinal cross-sectional view through a second example of an optical fibre cable to which embodiments of the disclosure are applicable. As before, the optical fibre cable 10, of which an end portion is shown, comprises a plurality of optical fibres 14 (two being shown for illustrative purposes only) secured as a bundle inside an outer jacket 16. This example also includes a central strength member or CSM 18, being an elongate strengthening element that runs longitudinally along the length of the cable 10, in the middle of the bundle of optical fibres 14, which may be twisted or wound around the CSM 18. Again, the optical fibre cable 10 has a severed end 12, but in this example cutting of the cable 10 has been carried out by a more detailed process than a simple snip or chop with a blade. Each of the components has been cut at a different position. The CMS 18 has been cut at a chosen position to give an end surface 12b. The optical fibres 14 have been cut back shorter than the CSM 18, so they have ends 12c beyond which the end surface 12b of the CSM protrudes. The jacket 12 has been stripped away from the optical fibres 14 within over a short distance, to an end surface 12a displaced from the ends 12c of the optical fibres 14. Hence the optical fibres 14 protrude from the jacket 16, and the CSM 18 protrudes from the jacket 16 by a longer amount, thereby also protruding beyond the ends 12c of the optical fibres 14.

Different configurations of severed optical fibre cable ends achieved by different cuts can be terminated in different ways according to various embodiments of the disclosure, if desired. Other cuts are also possible and the resulting cut ends can be similarly terminated. For example, the optical fibres 14 and a CSM 18 or other strength member may be cut to substantially the same length, with the jacket 16 being stripped back so the optical fibres 14 and the CSM 18 protrude from the jacket by a similar amount.

Figure 3 shows a simplified longitudinal partial cross-sectional schematic representation of a terminator that is useful for understanding the claimed invention. Herein, a terminator is a device or apparatus that forms or is configured to form a closed or sealed termination at an end of an optical fibre cable, with an aim of preventing or inhibiting the ingress of contaminants to the interior of the optical fibre cable, and specifically the interior of microstructured fibres in the optical fibre cable.

The terminator 20 comprises two parts or components: a terminating member 22 and a collar 30. The terminating member 22 is a hollow element in the form of a container or cap comprising one or more side walls 22a which extend between a closed end 24 of the terminating member 22 and an open end 26 of the terminating member 22 which is opposite to the closed end 24. In this example, the side walls 22a are straight and cylindrical, and the closed end 24 is curved, without forming a corner or edge with the side walls 22a, so the terminating member 22 has an overall elongate tubular shape similar to a test tube. Other shapes for the terminating member 22 are possible however, and the invention is not limited in this regard. The open end 26 of the terminating member 22 is configured for cooperation with the severed end 12 of an optical fibre cable 10. Various options are envisaged for achieving this cooperation; in some examples the cooperation may be an engagement of the severed end 12 of the cable with the open end 26 of the terminating member. Engagement may be effected by at least a part of the severed end 12 being inserted into or received within the terminating member 22. The cooperation places the parts such that the closed end 24 of the terminating member forms a cover or barrier between the exposed interior of the optical fibre cable 10 and the fibres 14 at the severed end 12, and the external environment, so that potentially contaminating material is prevented from entering the interior of the optical fibre cable 10 and the interior of the fibres 14.

The collar 30 of the terminator 20 is provided in order to secure the terminator 20 to the optical fibre cable 10. Preferably, the securing is achieved so as to provide a sealed termination for the optical fibre cable 10 that can inhibit or prevent the ingress of particulate, liquid and gaseous contaminants. The sealing provided by the terminator 20 may be considered to provide a hermetic seal in such cases, but a lesser seal that does not fully block all gases, liquids or smaller particles can still be beneficial, particularly in circumstances where the terminator 20 is expected to be fitted to the optical fibre cable 10 for a short time only.

The collar 30 is generally tubular, comprising one or more side walls 30a that extend between a first end 32 and a second end 34 opposite to the first end 32. Conveniently, the side walls 30a have a generally cylindrical shape (circular cross-section) since this provides better coupling to the optical fibre cable 10 which also has a substantially circular cross-section. The first end 32 of the collar 30 receives the open end of the terminating member 22 in a sealed manner, so that there is a seal formed at the boundary between the collar 30 and the terminating member 22, typically between an inner surface of the collar 30 and an outer surface of the terminating member 22. The seal may be achieved in any convenient manner, depending on the structure and configuration of the collar 30 (examples of which are discussed further below) and the terminating member 22. As a simple example, adhesive may be applied between facing surfaces of the collar 30 and the terminating member 22, or an O-ring of rubber or similar may be provided between the facing surfaces to close any gaps that may otherwise exist and to provide some friction and grip between the collar 30 and the terminating member 22.

Also, the terminator 20 may be provided for use with the collar 30 and the terminating member 22 already sealingly coupled together. Alternatively, the collar 30 and the terminating member 22 may be provided as separate components in a kit, for coupling together in the field where it is required to terminate an optical fibre cable 10. These two alternatives may be selected for convenience according to the chosen structure and configuration for the two components and the manner in which the seal between the two is provided.

The second end 34 of the collar 30 is an open end with an internal diameter D. The collar 30 is configured so that its internal diameter D is reducible, in other words it can be made smaller (reduced in size). The second end 34 is configured to receive the severed end 12 of the optical fibre cable 10 for engagement with the open end 26 of the terminating member 22, the severed end 12 being received along a direction indicated by the arrow R in Figure 3. In various examples, the severed end 12 may be engaged with the open end 26 by being inserted into the second end 34 of the collar 30 (where the terminating element 22 and the collar 30 have been previously joined together), or the severed end 12 may be engaged with the open end 26 in advance of the collar being applied or placed around both the cable 10 and the terminating member 22. In either alternative, once the severed end 12 of the cable 10 is engaged with the open end of the terminating member 22, the internal diameter D of the second end 34 of the collar 30 is reduced to make contact with the outer surface of the cable 10, and to form a seal of the collar 30 around the cable 10. In conjunction with the seal between the first end 32 of the collar 30 and the terminating member 22, the sealing of the collar 30 around the cable 10 provides a closed and sealed termination for the severed end 12 of the optical fibre cable 10, thereby protecting it from contamination.

In order to enable insertion of the cable 10 into the second end 34 of the collar 30 (where the collar 30 may or may not already be coupled to the terminating member 22), or arrangement of the collar 30 around the cable 10, such as by sliding the second end 34 of the collar 30 over the cable 10 (which may or may not already be engaged with the open end 26 of the terminating member 22), the internal diameter D of the second end 34 of the collar is initially not smaller than the outer or external diameter DC of the cable 10. Conveniently, the internal diameter D is larger than the cable outer diameter DC to facilitate the severed end 12 of the cable being received in the second end 34 of the collar 30 by providing some clearance space. For example, the internal diameter D may be about 1 mm or 2 mm or 3 mm larger than the outer diameter DC, or in the range of 0.5 mm to 5 mm larger. A smaller difference may be preferred in order to minimise the amount by which the internal diameter D needs to be reducible to make a seal around the outer surface of the optical fibre cable 10.

Figure 4 shows a simplified longitudinal partial cross-sectional schematic representation of the terminator 20 of Figure 3 installed on the optical fibre cable 10. The severed end 12 of the cable 10 is engaged with the open end 26 of the terminating member 22. In this example, this engagement comprises the insertion of severed end 12 into the open end 26 of the terminating member 22 across the full width of the cable 10, so that an end part of the jacket 16 is received within terminating member 22. This is enabled by the open end 26 of the terminating member 22 having an internal diameter di which is not smaller than the external diameter DC of the cable 10. As depicted, the internal diameter di is substantially the same as or just slightly larger than the external diameter DC so the cable 10 fits snugly into the terminating member 20; this can aid in protecting the severed end 12 and in retaining the various components in a secure configuration.

The internal diameter of the second end 34 of the collar 30 has now been reduced to DR, which matches the external diameter DC of the cable 10 in order seal the collar 10 around the outside surface of the cable 10 as described above.

The various embodiments are not limited to any particular width or diameter of cable. They are applicable to both terrestrial and aerial forms of optical fibre cable; these typically have external diameters in the range of about 1 mm to 25 mm. Cables in the mid part of this range may more readily handled in the context of implementing embodiments of the invention, where external diameters are in the range of about 3 mm to 13 mm, for example.

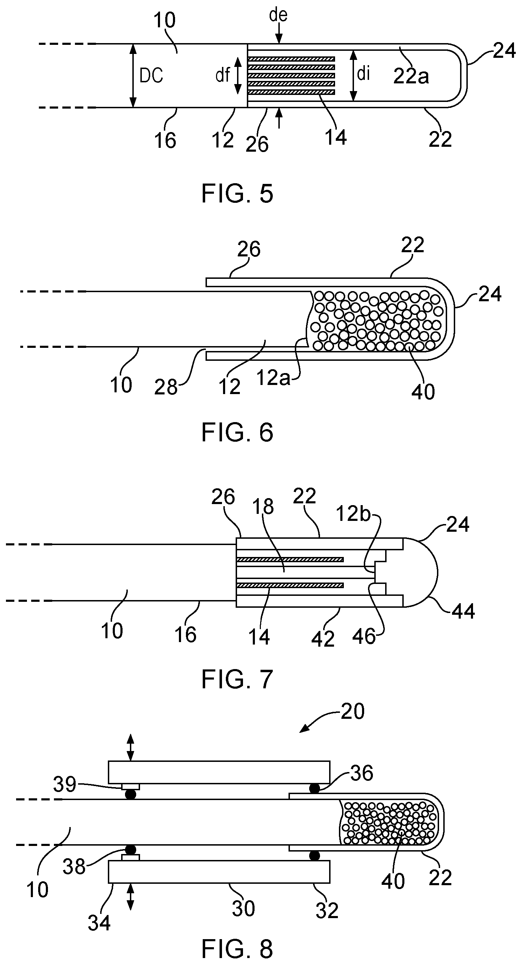

Figure 5 shows a simplified longitudinal partial cross-sectional schematic representation of an optical fibre cable 10 engaged with a terminating member 22 in accordance with a further example. The collar of the terminator has been omitted for clarity but may be according to any of the examples and embodiments described herein. In this example, the optical fibre cable 10 has a severed end 12 which has been prepared similarly to that of the Figure 2 example, in that the jacket 16 has been stripped from an end part of the cable 10 in order that the internal parts of the cable 10 protrude beyond the jacket 16. In this example, the cable 10 is shown as containing optical fibres 14 only, but may include strength members and/or buffers as noted above. The severed end 12 of the cable 10 is engaged with the second end 26 of the terminating member 22 by being inserted into the terminating member far enough that the protruding optical fibres 14 (plus any other internal elements in the cable) are located inside the terminating member 22 (and are surrounded by the side walls 22a), but not so far that the jacket 16 is also inserted. The jacket 16 remains external to the terminating member 22. While the internal diameter di of the open end 26 of the terminating member 22 may be larger than the external diameter DC of the cable 10, this engagement by partial insertion may be otherwise arranged. As shown in Figure 5, the internal diameter di of the open end 26 of the terminating member 22 is smaller than the external diameter DC of the cable 10, but not smaller than the external diameter df of the bundle of the optical fibres 14 within the cable 10. In this way, the protruding end part of the optical fibres 14 can be received inside the terminating member 22, but the jacket itself cannot be received inside the terminating member 22 since it is too wide. Hence, insertion of the severed end 12 into the terminating member 22 is arrested by abutment of the rim of the open end 26 of the terminating member 22 against the cut edge of the jacket 16. This approach may be useful in protecting the fibre ends from damage during fitting of the terminator, for example. If the protruding fibres 14 are cut to be shorter than the internal length of the terminating member 22, the ends of the fibres are protected from contact with the inside of the closed end 24 of the terminating member, which could otherwise occur if there is nothing to limit the amount by which the severed end 12 of the cable 10 can be inserted into the terminating member 22.

In the example of Figure 5, the terminating member 22 is shown as having an external diameter or width de which is substantially the same as the external diameter DC of the cable 10. While not essential, this arrangement can provide a relatively continuous and uninterrupted outer surface for the cable 10 engaged into the terminating member 22. This may facilitate easier or simpler fitting or application of the collar. Also, depending on the style of collar used, the outer surface of the fitted terminator may follow or reflect the underlying surface of the cable 10 and the terminating member 22, and therefore be similarly smooth and uninterrupted. This can facilitate subsequent handling and manipulation of the terminated optical fibre cable.

The cable terminators proposed herein provide a sealed physical barrier between an open cable end and the surrounding environment, to inhibit contaminants from the environment from entering the interior of the fibres and cable, as discussed herein. Further protection and upkeep of the cable can additionally be provided by configuring the terminator to additionally remove contaminants that may already be present before the terminator is attached. For example, contaminants may have entered between severing of the cable and fitting of the terminator, or may be present from manufacture of the cable or the individual fibres. In particular, the interior of the cable, or the interior of the fibres, may contain water (as liquid or vapour) or carbon dioxide.

In order to remove these and other contaminant substances, the terminator may include materials which are able to absorb contaminant substances from the atmosphere within the terminator, including the end parts of voids in the fibres, while the terminator is attached to the cable. Conveniently, one or more such absorbent materials can be contained within the hollow terminating member. Hence, when the severed end of the cable is engaged with the terminating member, the void inside the terminating member (bounded by the closed end and the side walls) is partially occupied by absorbent materials, and partially occupied by the at least part of the severed end of the cable.

Figure 6 shows a simplified longitudinal partial cross-sectional schematic representation of an optical fibre cable 10 engaged with a terminating member 22 in accordance with such an example. Again, the collar of the terminator is omitted for clarity. The severed end 12 of the cable 10 is engaged by being inserted into the open end 26 of the terminating member 22 by a distance less than the interior length of the terminating member 22. This leaves a space between the end face 12a of the cable 10 and the closed end 24 of the terminating member 22. The terminating member 22 contains, in this space, a quantity of absorbent material(s) 40, which are able to absorb contaminant substances out of the optical fibre cable 10. For example, the absorbent material 40 may comprise silica gel, which is able to absorb any liquid water or water vapour that maybe present in the end part of the optical fibre cable 10. Other absorbent materials may be additionally or alternatively included. For example, carbon dioxide can be removed from the optical fibre cable by amines such as monoethanolamine (MEA) and diethanolamine (DEA), or by calcium hydroxide.

The absorbent material 40 may take any convenient form. As depicted in Figure 6, it may have a particulate form, such as is common for silica gel. In such a case, it is useful for the particle size of the absorbent material to be larger than any gap 28 that may be present between the outer surface of the engaged end 12 of the cable 10 and the inner surface of the terminating member 22, so that the absorbent material is held in the terminating member 22 by the presence of the end 12 of the cable 10, and cannot readily slide out of the terminating member 22. For example, a typical particle size of about 2 mm for silica gel is entirely suitable to achieve this effect.

Other absorbent materials for removing water and carbon dioxide or other contaminant substances can be included as desired. More than one absorbent material can be included to remove more than one type of contaminant substance.

A terminator may be provided for use having one or more absorbent substances already present in the terminating member. In other examples, the absorbent substance(s) may be provided as a separate component which can be added into the terminating member as and when required, for example as a matter or routine, or if a known contamination of the cable has occurred. Either alternative may be used in conjunction with the alternatives of a pre-assembled terminator (the terminating member and the collar already coupled together) and a kit of separate terminating member and collar for assembly in the field.

The amount of absorbent substance or substances which is provided may be chosen with reference to the dimensions of the cable and the terminator, or with reference to a likely or suspected amount of contamination to be managed. Relatively small amounts can be useful, for example in the range of about 0.5 g to 20 g, or about 1 g to 5 g, although larger amounts may be used if preferred or required. The appropriate weight will also depend on the density and efficacy of the relevant substance.

A variety of configurations and materials are possible for forming the terminating member. In the examples of Figures 3 to 6, the terminating member is a unitary, one-piece component, which may be formed by moulding or machining a suitable material such as a polymer material. In some cases it may be considered useful for the terminated cable end to be visible after the terminator has been fitted. This can be achieved by forming the terminating member from a transparent material, such a transparent polymer. In embodiments where an absorbent material is contained in the terminating member, a transparent terminating member can allow observation of the absorbent material instead of or in addition to the severed end of the cable. Some absorbent material undergoes a visible state change when absorption has taken place, so that the occurrence of absorption can be determined from a simple visual inspection of the terminator. For example, silica gel is available in colour-changing formulations, where a change of colour from a first colour to a second colour occurs when water has been absorbed.

According to the invention, the terminating member comprises two or more pieces or components, rather than the unitary construction described above. These pieces may be joined together to assemble the terminating member in advance of supply of the terminator for use (as a ready-made item or as a kit of parts). Alternatively, the terminating member may be provided for use as unassembled parts or pieces, which are intended to be assembled in the field as part of the fitting of the terminator to an optical fibre cable.

The terminating member is formed from two pieces. The two pieces comprise a first piece that provides the side wall or walls, and a second piece that provides the closed end.

Figure 7 shows a simplified longitudinal partial cross-sectional schematic representation of an optical fibre cable 10 engaged with such an example of a two-piece terminating member 22. Similarly to the Figure 5 example, the cable 10 has been severed to include stripping of the jacket to reveal a protruding bundle of fibres 14, and is engaged with the terminating member 22 by insertion of the protruding fibres 14 into the terminating member until the rim of the open end 26 terminating member 22 abuts the cut end of the jacket 16. The terminating member 22 comprises a first piece having the form of a tube 42 open at both ends, in this example a straight cylindrical tube. One end of the tube 42 provides the open end 26 of the terminating member 22. A second piece of the terminating member 22 comprises a plug or bung 44 which is insertable into the opposite end of the tube 42, to close the opening of that end and hence form the closed end 24 of the terminating member 22. The plug 44 may engage with the tube 42 or otherwise be held in place in any convenient way that provides a secure assemblage of the two parts of the terminating member 22. For example, a screw threaded connection might be provided so that the plug 44 is screwed into the end of the tube 42. Alternatively, a friction fit might be employed so that the plug 44 is pushed into the end of the tube 42. Hence, the inwardly facing side of the plug 44 may be shaped to enable engagement with the tube 42. In the illustrated example, the plug 44 has an inwardly stepped profile to match the internal shape and size of the tube 42 so the plug 44 can be pushed into the end of the tube 42. One or more flanges or similar on the plug 44 or the tube 42 may be provided to assist a frictional fit. In this example, the externally facing surface of the plug 44 has a smoothly curved profile to avoid corners and emulate the test tube shape of the previous examples of the terminating element. Other shapes may be used if preferred.

Any suitable materials may be used for the two pieces of the terminating member. For example, they may be formed from polymer materials, as before. In particular, the tube may be made from a transparent material such as polymer to allow visual inspection of the engaged severed end of the cable. Alternatively, the tube and the plug may be made from metals. Stainless steel tubing may be used as the tube, for example; this is readily available and can be simply cut to a required appropriate length. A metal plug provides a strong and robust end for the terminator, which may be valuable if the terminated cable is undergo rough handling in subsequent installation processes such as pushing or pulling through ducting or pipe work. A plug moulded from polymer, rubber or other plastic material can be slightly deformable for ease of fit with the tube.

Returning to Figure 7, note that the optical fibre cable 10 in this example includes a CSM 18, which has been cut to protrude past the ends of the fibres 14. Also, the inwardly facing surface 46 of the plug 44 is configured, such as by shaping, to engage with the cut end 12b of the CSM 18. The engagement allows the plug to be joined or connected to the CSM 18, which not only helps to secure the terminating member 22 in place, but provides reinforcement and overall strength to the terminated end of the cable 10. The engagement may be achieved by shaping of the inwardly facing surface to provide an abutment face which butts against the end 12b of the CSM 18. If the terminating member is supplied in two pieces, glue (adhesive) can be applied to one or both of the abutment face and the CSM end 12b so that when the cable and the parts of the terminating member are all assembled together (which can be done in various orders as will be appreciated by the skilled person), the plug 44 is bonded to the end 12b of the CSM 18, and becomes united with the cable 10. Other alternatives may be used to engage the CMS and the plug. As another example, the inwardly facing surface 46 may be formed with a central recess into which the end 12b of the CSM 18 is received when the terminating member 22 is assembled with the cable 10.

Although Figure 7 shows a two-piece terminating member used with a cable which has been cut such that the fibre bundle protrudes, in an example not forming part of the claimed invention a two-piece terminating member may also be used with a simple plane-cut cable as shown in the Figure 6 example, omitting engagement between the CSM and the plug. Similarly, a two-piece terminating member may be used with a cable lacking a CSM. A two-piece terminating member may be used in conjunction with the absorbent materials described with regard to Figure 6. Any such absorbent materials may be added into the terminating member through the open end after the terminating member is itself assembled, or could be added through the opposite end of the tube before the tube is closed with the plug.

The collar of the terminator may similarly be configured in a number of ways to provide the required features. Returning to Figures 3 and 4, the collar 30a is depicted very simply as a tube. While this is in part merely a representative illustration intended to convey the overall position of the collar and its relationship with the terminating element and the cable, it can also act as a more accurate depiction of some embodiments in which the collar is a simple tube of a suitable material.

For example, the collar may comprise a tube of a heat-shrinkable material such as polyolefin or polyester. The shrinkage of the tube under the application of heat provides the reduction in internal diameter of the second end in order to seal the collar around the cable. In order to use a heat-shrinkable collar, several alternatives are suitable. The terminator may be provided as a kit of parts in which the collar and the terminating member are separate items. The terminating member is assembled with the cable by engaging the severed end of the cable with the open end of the terminating member. Then, the collar can be slid over the terminating member until it bridges the join between the cable and the terminating member. Application of heat at both ends of the collar at least will shrink the collar to provide the seal with the terminating member at the first end and the seal with the cable at the second end, in a single assembly step. Alternatively, the first end of the collar may be pre-shrunk around the open end of the terminating member to make a pre-assembled terminator, into which a severed cable end can be inserted or otherwise received before heat is applied to the second end of the collar to seal the terminator to the cable. A heat-shrinkable collar could also be provided as a split tube, open along one side so as to be able to be placed around the cable and the terminating member from the side, which may be simpler than sliding it over an end.

The collar may be formed from an elastic or rubberised material shaped as a tube, which can be stretched and pulled over the cable and the terminating member. The elasticity pulls the collar tightly against the cable and the terminating member to form seals with these components.

Figure 8 shows a simplified longitudinal partial cross-sectional schematic representation of a terminator 20 having a different design of collar. The collar 30 comprises a generally tubular member, formed for example from a plastics or metallic material. In contrast to previous examples in which the reducible internal diameter of the collar is provided by an inherent characteristic of the material from which the collar is made, in this example the reducible internal diameter is achieved by movable parts, so that mechanical adjustment with a tool or by hand is required to reduce the internal diameter and produce the seal of the second end of the collar 30 around the cable 10.

As before the tubular collar 30, with a central hollow bore, has a first end 32 into which the open end of the terminating member 22 is received, in a sealed manner. In this example, the seal is provided by a first O-ring or grommet 36 mounted around the inner surface of the bore of the collar 30 which seals a gap between the inner surface of the collar 30 and the outer surface of the side walls of the terminating member 22. Other methods may be used for the seal, being reversible such as push fit, friction fit or screw thread arrangements, or more permanent such as gluing or other bonding methods. It is envisaged that any of these may be performed in advance so as to supply a terminator which is already assembled, or performed as part of the fitting of the terminator where the terminator is provided as a kit of parts. The second end 34 of the collar 30 is provided with a second O-ring or grommet 38 mounted around the inner surface of the bore. The collar also comprises one or more movable parts 39 on which the O-ring 38 is seated, and which are configured to move inwardly (that is, towards the cable 10) to tighten or compress the O-ring 38 against the outer surface of the inserted cable 10. The movement may be achieved by operation of a rotating cuff on the outer surface of the collar, for example, rotation of which causes an inward movement of the movable parts 39. Lever or ratchet operation might similarly be used; these and other methods will be apparent to the skilled person.

A mechanically operable collar may be configured such that the reduction in the internal diameter is reversible so the internal diameter can be increased again, such as by reversing the operation of the movable parts (opposite rotation of the rotatable cuff, for example). This allows simple and rapid removal of the terminator 20 when access to the severed end of the cable 10 is again needed, and may allow re-use of the terminator.

The seal between the collar 30 and the terminating member 22, indicated by the first O-ring 36 in Figure 8, may similarly be configured for mechanical adjustment and operation. If the terminator is provided as a kit of parts, this can facilitate coupling between the collar 30 and the terminating member 22 in the field. Alternatively, the collar 30 and the terminating member 22 can be joined in advance to provide a pre-assembled terminator as previously described.

In addition to the function of protecting the fibres in a severed optical fibre cable from the ingress of contaminating material, a terminator as presently proposed offers other advantages. In particular, the end of the cable is also protected from damage such as by physical impact during any subsequent installation of the cable through a duct, pipe, channel or similar. Moreover, a cable terminated with embodiments of the proposed terminator is entirely compatible with common techniques for installing cable in these locations.

A first technique involves hauling or pulling a cable through a duct or similar. In order to achieve this pulling action, a line is attached to the front end of the cable. The attachment is achieved by use of a cable sock, which comprises an adjustable tubular lattice of galvanised steel which fits over the end of the cable and contracts to grip around the cable. The sock has a swivel joint at its end to which the line is attached, enabling hauling without twisting the cable. Terminators according to the proposal can be made compact, for example using embodiments with features from Figures 4, 5 and 7 that do not significantly increase the width or overall bulk of the end of the cable (for example, a terminating member with an outer diameter similar to the outer diameter of the cable, and a collar formed as a tube able to contract its diameter via suitable material properties, such as heat-shrinking or elasticity), in which case a cable sock configured to fit a bare cable end is similarly compatible with a terminated cable as described herein.

A second technique for installing cable, termed blowing, involves pushing a cable through a duct or similar, by feeding the cable into the duct and injecting pressurised air behind the front end of the cable to carry the cable forwards. Again, compact terminators are well-suited to this application, and the use of a metal-ended terminating member can additionally protect the cable end from any impacts if the blowing throws the cable end against the walls of the duct.

In order to conveniently carry out these installation techniques, it is useful for the terminator to be not excessively large in comparison with the cable width. For example, the overall length of a terminator may be in the range of about 1 to 20 times the external diameter of the cable, more particularly about 2 to 15 times the external diameter of the cable. The largest external diameter of a terminator, when fitted to a cable, may be in the range of about 5 mm to 15 mm greater than the external diameter of the cable, or in the smaller range of about 0 mm to 3 mm greater than the external diameter of the cable, for enhanced compactness. The overall external shape of a terminator may be such that its general transverse cross-sectional profile is the same as or similar to that of the cross-sectional shape of the cable. For example, a terminator with a generally circular cross-section can usefully be fitted to a cable of circular cross-section. These various parameters are not limiting, however, and the invention may be implemented with other shapes and dimensions. The total length of cable for which a terminator may be found useful is also not limited; examples include cable installation lengths in the range about of 0.01 km to 30 km, or about 0.05 km to 6 km.

As noted, a terminator can be supplied already assembled for use. In this case, the terminator is fitted by inserting the severed cable end into the collar and hence into the open end of the terminating member to engage the severed end with the terminating member, and then reducing the internal diameter of the second end of the collar to seal the terminator around the cable. The terminator may or may not include absorbent material(s) contained in the terminating member. Alternatively, the terminator can be supplied as a kit of parts to be assembled into a terminator as part of the process of fitting it to a cable. The kit comprises a collar and a terminator in two (or more) pieces requiring joining together to create the terminating member. The kit may further comprise absorbent materials to be contained in the terminating member. Alternatively, the kit may comprise a preassembled terminator plus separate absorbent material for adding to the terminating member if required. The terminator may be assembled first by joining the collar and the terminating member, and the assembled terminator then being fitted to the cable. Alternatively, the severed cable end may be engaged with the terminating member (or part thereof) first, before the collar is added.

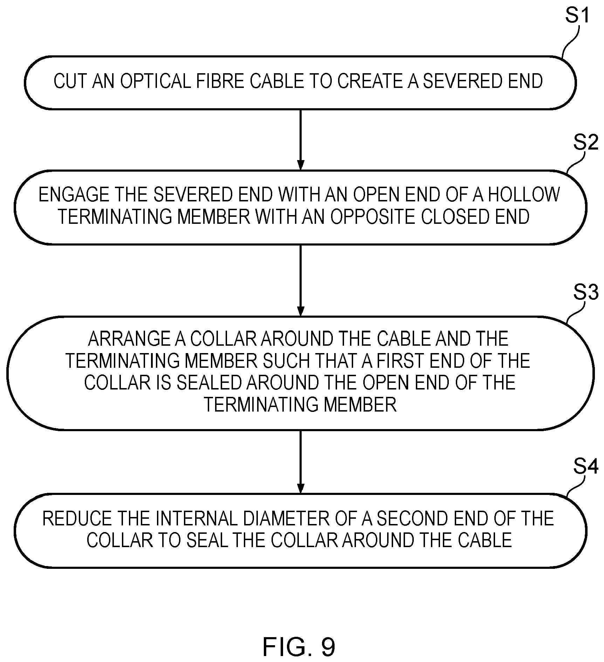

Figure 9 shows a flow chart of steps in an example method for terminating an optical fibre cable. A first step S1 of the method requires cutting through an optical fibre cable to create a severed end, such as in the various examples explained above. In a second step S2, the severed end is engaged with an open end of a hollow terminating member that has an opposite closed end. Then in a third step S3, a collar with a tubular shape is arranged around the cable and the terminating member so that a first end of the collar is sealed around the open end of the terminating member (in an alternative, the collar may be sealingly arranged around the terminating member before engagement of the severed end in step S1). In a final step S4, the internal diameter of a second end of the collar opposite the first end is reduced in order to seal the collar around the cable, thereby sealing the terminator over the severed end of the cable.

In an alternative, steps S1, S2 and S3 may be modified by firstly threading the collar onto the cable (before or after the cable is cut to form the severed end), then engaging the severed end of the cable with the terminating member, and then arranging the collar, with sealing, around the terminating member. This is an option when the terminator is provided as a kit of parts.

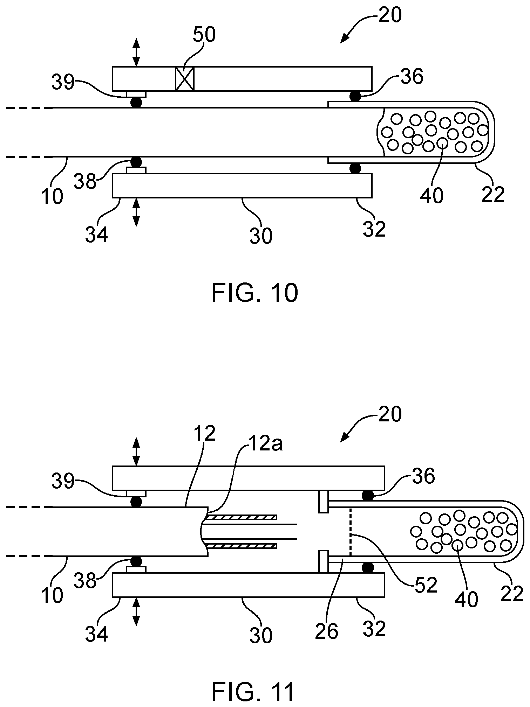

Figure 10 shows a schematic longitudinal cross-sectional view of another example terminator 20, fitted to a cable 10. The collar 30 of the terminator 20 is configured similarly to the example in Figure 8, and the terminating member 22 contains absorbent material 40, although these aspects are not essential. The example in Figure 10 differs from previous examples in that it additionally comprises a valve 50, configured to give re-sealable air flow communication to the interior space of the terminator 20 from the surrounding environment. The valve 50 allows air to be introduced into the interior of the terminator 20 once it has been fitted to the severed end of the cable 10, in order that the inside of the terminator can be pressurised, in other words, brought to a higher pressure than the atmospheric pressure of the surrounding environment. This pressurisation increases the sealing effect of the terminator, since it inhibits seepage of liquid and gas past the seals between the collar and the cable and the collar and the terminating member. The quality of the seals may be compromised slightly due to factors such as temperature changes, for example, and this can allow ingress of any surrounding fluids, but can be countered by an increased internal pressure in the terminator 20. This is particularly useful in circumstances where the cable end may have to be left by a deployment team in a contaminated location, such as a street cabinet or an access chamber that may contain dirty water.

The valve 50 can be any design or configuration suitable to engage with a convenient means of introducing air (or another gas) through the valve 50 and into the terminator 20, such as a hand pump (bicycle pump), foot pump, motorised pump, or gas cartridge or canister. In use, the terminator 20 is firstly fitted to the cable 10, and the appropriate seal or seals made (depending on the original configuration of the terminator 20), and then the internal air pressure can be increased by way of the valve 50. Figure 10 shows the valve 50 located in the wall of the collar 30, but it may alternatively be located in the wall of the terminating member 22.

The embodiments and examples described above have all implemented the cooperation between the severed end of the cable and the open end of the terminating member as an engagement, typically involving physical contact between the two parts, and potentially comprising the insertion of at least part of the cable end into the terminating member. The cooperation may be implemented otherwise, however, and still enable the sealing of the cable end by providing the closed end of the terminating member as a barrier which is sealingly secured around the cable.

Figure 11 shows a schematic longitudinal cross-sectional view of an example terminator 20 fitted to a cable 10 such that end surface 12a of the severed end 12 of the cable 10 is spaced apart from the open end 26 of the terminating member 22. The collar 30 of the terminator 20 is configured similarly to the example in Figure 8, and the terminating member 22 contains absorbent material 40, although these aspects are not essential and may instead be in accordance with other examples. Hence, the severed end 12 of the cable 10 is placed in cooperation with the open end 26 of the terminating member 22 by the severed end 12 and the open end 26 facing one another, along the longitudinal direction defined by the length of the cable 10, while the collar 30 is sealed around the terminating member 22 at its first end 32 and around the cable 10 at its second end 34, as before. The facing relationship may have the severed end 12 and the open end 26 immediately adjacent to one another, or butted up against one another. Alternatively, as shown in Figure 11, the severed end 12 and the open end 26 may be spaced apart from one another along the longitudinal direction.

A facing cooperation may be more straightforward to achieve, or to achieve more rapidly, than an engaging, inserted, cooperation, for example if the cable's outer diameter is not smaller than the terminating member's inner diameter.

In order to retain the absorbent material 40 (if included) inside the terminating member (which prevents spillage if the terminator is removed from the cable), a permeable barrier 52 can be provided extending across the bore of the terminating member 22. The barrier 52 is configured to allow the passage of the substance(s) which the absorbent material 40 is able to absorb so the substances can reach the absorbent material 40, but to block movement of the absorbent material 40 out of the terminating member 22. Any design which has pores or apertures smaller than the particulate size of the absorbent material 40 will achieve this, so the barrier may comprise a membrane, a mesh or a grill, for example. If the terminator is provided as a kit of parts, the terminating member may be supplied for use with the absorbent material already in place behind the barrier, or the terminating member, the absorbent material and the barrier may be supplied as separate parts for assembly during installation of the terminator.

In examples not forming part of the claimed invention, the terminator may find utility for other applications, such as termination of other types of cable, such as electrical cable.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention.

## Claims

1. A terminator (20) for an optical fibre cable including at least one microstructured optical fibre, the terminator comprising:
a hollow terminating member (22) with a closed end (24) and an opposite open end (26) configured for cooperation with a severed end of an optical fibre cable, wherein the terminating member comprises a tube (42) and a plug (44) insertable into an end of the tube to form the closed end (24) of the terminating member and wherein the plug is shaped to engage with a central strength member (18) in the optical fibre cable when the terminating member is in cooperation with the severed end of the optical fibre cable; and
a tubular collar (30) having a first end (32) into which the open end of the terminating member is received in a sealed manner, and an opposite second end (34) to receive the severed end of the optical fibre cable for cooperation with the open end of the terminating member, the second end having an internal diameter which is reducible to seal the tubular collar around the optical fibre cable.

2. A terminator according to claim 1, wherein the open end of the terminating member is configured for cooperation with the severed end of the optical fibre cable by being configured for engagement with the severed end of the optical fibre cable.

3. A terminator according to claim 2, wherein the open end of the terminating member is configured for engagement with the severed end of the optical fibre cable by at least a part of the severed end being inserted into the terminating member.

4. A terminator according to claim 1, configured such that the cooperation of the open end of the terminating member with the severed end of the optical fibre cable comprises the open end of the terminating member facing the severed end of the optical fibre cable when the tubular collar has been sealed around the optical fibre cable.

5. A terminator according to claim 4, wherein the cooperation comprises the open end of the terminating member facing and longitudinally spaced apart from the severed end of the optical fibre cable

6. A terminator according to any one of claims 1 to 5, wherein the tubular collar comprises a tube of heat-shrinkable material such that application of heat to the second end will reduce the internal diameter to seal the tubular collar around the optical fibre cable.

7. A terminator according to any one of claims 1 to 5, wherein the tubular collar is configured such that the internal diameter of the second end can be reduced by mechanical adjustment.

8. A terminator according to any one of claims 1 to 7, wherein the terminating member contains one or more materials (40) able to absorb contaminant substances out of the atmosphere within the terminator when the terminator is fitted to an optical fibre cable.

9. A terminator according to claim 8, wherein the one or more materials are able to absorb water and/or carbon dioxide.

10. A terminator according to any preceding claim, further comprising a valve (50) via which pressure inside the terminator may be increased after the terminator is fitted to an optical fibre cable.

11. An optical fibre cable including at least one microstructured optical fibre, the optical fibre cable having a severed end sealed with a terminator according to any one of claims 1 to 10.

12. A kit for forming a terminator (20) for an optical fibre cable including at least one microstructured optical fibre, the kit comprising:
a hollow terminating member (22) with a closed end (24) and an opposite open end (26) configured for cooperation with a severed end of an optical fibre cable, wherein the terminating member comprises a tube (42) and a plug (44) insertable into an end of the tube to form the closed end (24) of the terminating member and wherein the plug is shaped to engage with a central strength member (18) in the optical fibre cable when the terminating member is in cooperation with the severed end of the optical fibre cable; and
a tubular collar (30) having a first end (32) for receiving the open end of the terminating member in a sealable manner, and an opposite second end (34) for receiving the severed end of the optical fibre cable for cooperation with the open end of the terminating member, the second end having an internal diameter which is reducible to seal the tubular collar around the optical fibre cable.

13. A method of terminating an optical fibre cable including at least one microstructured fibre, the method comprising:
severing the optical fibre cable to create a severed end at which optical fibres in the optical fibre cable are exposed; and
using a kit according to claim 12 to form a terminator according to any one of claims 1 to 10 sealed over the severed end of the optical fibre cable.

## Patentansprüche

1. Abschlussstück (20) für ein Glasfaserkabel, das mindestens eine mikrostrukturierte Glasfaser enthält, wobei das Abschlussstück umfasst:
ein hohles Abschlusselement (22) mit einem geschlossenen Ende (24) und einem gegenüberliegenden offenen Ende (26), das für eine Zusammenwirkung mit einem abgetrennten Ende eines Glasfaserkabels konfiguriert ist, wobei das Abschlusselement ein Rohr (42) und einen Stecker (44) umfasst, der in ein Ende des Rohrs einführbar ist, um das geschlossene Ende (24) des Abschlusselements zu bilden, und wobei der Stecker so geformt ist, dass er in ein mittleres Festigkeitselement (18) im Glasfaserkabel eingreift, wenn das Abschlusselement mit dem abgetrennten Ende des Glasfaserkabels zusammenwirkt; und
eine Rohrhülse (30) mit einem ersten Ende (32), in das das offene Ende des Abschlusselements dichtend aufgenommen ist, und einem gegenüberliegenden zweiten Ende (34), um das abgetrennte Ende des Glasfaserkabels für eine Zusammenwirkung mit dem offenen Ende des Abschlusselements aufzunehmen, wobei das zweite Ende einen Innendurchmesser aufweist, der reduzierbar ist, um die Rohrhülse um das Glasfaserkabel abzudichten.

2. Abschlussstück nach Anspruch 1, wobei das offene Ende des Abschlusselements für eine Zusammenwirkung mit dem abgetrennten Ende des Glasfaserkabels konfiguriert ist, indem es für einen Eingriff in das abgetrennte Ende des Glasfaserkabels konfiguriert ist.

3. Abschlussstück nach Anspruch 2, wobei das offene Ende des Abschlusselements so konfiguriert ist, dass es mit dem abgetrennten Ende des Glasfaserkabels in Eingriff gelangt, indem mindestens ein Teil des abgetrennten Endes in das Abschlusselement eingeführt wird.

4. Abschlussstück nach Anspruch 1, das so konfiguriert ist, dass das Zusammenwirken des offenen Endes des Abschlusselements mit dem abgetrennten Ende des Glasfaserkabels umfasst, dass das offene Ende des Abschlusselements dem abgetrennten Ende des Glasfaserkabels zugewandt ist, wenn die Rohrhülse um das Glasfaserkabel abgedichtet ist.

5. Abschlussstück nach Anspruch 4, wobei das Zusammenwirken umfasst, dass das offene Ende des Abschlusselements dem abgetrennten Ende des Glasfaserkabels in Längsrichtung zugewandt und von diesem angeordnet ist.

6. Abschlussstück nach einem der Ansprüche 1 bis 5, wobei die Rohrhülse ein Rohr aus wärmeschrumpfbarem Material umfasst, sodass durch Beaufschlagung des zweiten Endes mit Wärme der Innendurchmesser verringert wird, um die Rohrhülse um das Glasfaserkabel herum abzudichten.

7. Abschlussstück nach einem der Ansprüche 1 bis 5, wobei die Rohrhülse so konfiguriert ist, dass der Innendurchmesser des zweiten Endes durch mechanische Anpassung verringert werden kann.

8. Abschlussstück nach einem der Ansprüche 1 bis 7,
wobei das Abschlusselement enthält
ein oder mehrere Materialien (40), die in der Lage sind, Schadstoffe aus der Atmosphäre im Abschlussstück zu absorbieren, wenn das Abschlussstück an ein Glasfaserkabel angeschlossen ist.

9. Abschlussstück nach Anspruch 8, wobei das eine oder die mehreren Materialien in der Lage sind, Wasser und/oder Kohlendioxid zu absorbieren.

10. Abschlussstück nach einem vorangehenden Anspruch, ferner umfassend ein Ventil (50), über das der Druck im Inneren des Abschlussstücks erhöht werden kann, nachdem das Abschlussstück an einem Glasfaserkabel angeschlossen wurde.

11. Glasfaserkabel, das mindestens eine mikrostrukturierte Glasfaser enthält, wobei das Glasfaserkabel ein abgetrenntes Ende aufweist, das mit einem Abschlussstück nach einem der Ansprüche 1 bis 10 abgedichtet ist.

12. Kit zum Bilden eines Abschlussstücks (20) für ein Glasfaserkabel, das mindestens eine mikrostrukturierte Glasfaser enthält, wobei das Kit umfasst:
ein hohles Abschlusselement (22) mit einem geschlossenen Ende (24) und einem gegenüberliegenden offenen Ende (26), das für eine Zusammenwirkung mit einem abgetrennten Ende eines Glasfaserkabels konfiguriert ist, wobei das Abschlusselement ein Rohr (42) und einen Stecker (44) umfasst, der in ein Ende des Rohrs einführbar ist, um das geschlossene Ende (24) des Abschlusselements zu bilden, und wobei der Stecker so geformt ist, dass er in ein mittleres Festigkeitselement (18) im Glasfaserkabel eingreift, wenn das Abschlusselement mit dem abgetrennten Ende des Glasfaserkabels zusammenwirkt; und
eine Rohrhülse (30) mit einem ersten Ende (32) zum dichtenden Aufnehmen des offenen Endes des Abschlusselements und einem gegenüberliegenden zweiten Ende (34) zum Aufnehmen des abgetrennten Endes des Glasfaserkabels für eine Zusammenwirkung mit dem offenen Ende des Abschlusselements, wobei das zweite Ende einen Innendurchmesser aufweist, der reduzierbar ist, um die Rohrhülse um das Glasfaserkabel abzudichten.

13. Verfahren zum Abschließen eines Glasfaserkabels, das mindestens eine mikrostrukturierte Faser enthält, wobei das Verfahren umfasst:
Abtrennen des Glasfaserkabels, um ein abgetrenntes Ende zu bilden, an dem Glasfasern im Glasfaserkabel freiliegen; und
Verwenden eines Kits nach Anspruch 12,
um ein Abschlussstück nach einem der Ansprüche 1
bis 10 zu bilden, das über das abgetrennte Ende des Glasfaserkabels abgedichtet ist.

## Revendications

1. Terminateur (20) pour un câble à fibre optique comportant au moins une fibre optique microstructurée, le terminateur comprenant :
un élément de terminaison creux (22) avec une extrémité fermée (24) et une extrémité ouverte opposée (26) configuré pour coopérer avec une extrémité coupée d'un câble à fibre optique, dans lequel l'élément de terminaison comprend un tube (42) et un bouchon (44) pouvant être inséré dans une extrémité du tube pour former l'extrémité fermée (24) de l'élément de terminaison et dans lequel le bouchon est conçu pour venir en prise avec un élément de renforcement central (18) du câble à fibre optique lorsque l'élément de terminaison coopère avec l'extrémité coupée du câble à fibre optique ;
un collier tubulaire (30) présentant une première extrémité (32) dans laquelle l'extrémité ouverte de l'élément de terminaison est reçue de manière étanche, et une seconde extrémité opposée (34) pour recevoir l'extrémité coupée du câble à fibre optique afin de coopérer avec l'extrémité ouverte de l'élément de terminaison, la seconde extrémité présentant un diamètre intérieur réductible pour sceller le collier tubulaire autour du câble à fibre optique.

2. Terminateur selon la revendication 1, dans lequel l'extrémité ouverte de l'élément de terminaison est configurée pour coopérer avec l'extrémité coupée du câble à fibre optique en étant configurée pour venir en prise avec l'extrémité coupée du câble à fibre optique.

3. Terminateur selon la revendication 2, dans lequel l'extrémité ouverte de l'élément de terminaison est configurée pour venir en prise avec l'extrémité coupée du câble à fibre optique par l'insertion d'au moins une partie de l'extrémité coupée dans l'élément de terminaison.

4. Terminateur selon la revendication 1, configuré de sorte que la coopération de l'extrémité ouverte de l'élément de terminaison avec l'extrémité coupée du câble à fibre optique comprend l'extrémité ouverte de l'élément de terminaison faisant face à l'extrémité coupée du câble à fibre optique lorsque le collier tubulaire a été scellé autour du câble à fibre optique.

5. Terminateur selon la revendication 4, dans lequel la coopération comprend l'extrémité ouverte de l'élément de terminaison faisant face à l'extrémité coupée du câble à fibre optique et étant espacée longitudinalement de celle-ci.

6. Terminateur selon l'une quelconque des revendications 1 à 5, dans lequel le collier tubulaire comprend un tube en matériau thermorétractable de sorte que l'application de chaleur à la seconde extrémité réduit le diamètre intérieur pour sceller le collier tubulaire autour du câble à fibre optique.

7. Terminateur selon l'une quelconque des revendications 1 à 5, dans lequel le collier tubulaire est configuré de sorte que le diamètre intérieur de la seconde extrémité peut être réduit par réglage mécanique.

8. Terminateur selon l'une quelconque des revendications 1 à 7,
dans lequel l'élément de terminaison contient
un ou plusieurs matériaux (40) capables d'absorber des substances contaminantes de l'atmosphère à l'intérieur du terminateur lorsque le terminateur est installé sur un câble à fibre optique.

9. Terminateur selon la revendication 8, dans lequel les un ou plusieurs matériaux sont capables d'absorber l'eau et/ou le dioxyde de carbone.

10. Terminateur selon une quelconque revendication précédente, comprenant également une valve (50) par l'intermédiaire de laquelle la pression à l'intérieur du terminateur peut être augmentée après l'installation du terminateur sur un câble à fibre optique.

11. Câble à fibre optique comportant au moins une fibre optique microstructurée, le câble à fibre optique présentant une extrémité coupée scellée avec un terminateur selon l'une quelconque des revendications 1 à 10.

12. Kit de formation d'un terminateur (20) pour un câble à fibre optique comportant au moins une fibre optique microstructurée, le kit comprenant :
un élément de terminaison creux (22) avec une extrémité fermée (24) et une extrémité ouverte opposée (26) configuré pour coopérer avec une extrémité coupée d'un câble à fibre optique, dans lequel l'élément de terminaison comprend un tube (42) et un bouchon (44) pouvant être inséré dans une extrémité du tube pour former l'extrémité fermée (24) de l'élément de terminaison et dans lequel le bouchon est conçu pour venir en prise avec un élément de renforcement central (18) du câble à fibre optique lorsque l'élément de terminaison coopère avec l'extrémité coupée du câble à fibre optique ;
un collier tubulaire (30) présentant une première extrémité (32) pour recevoir l'extrémité ouverte de l'élément de terminaison de manière étanche, et une seconde extrémité opposée (34) pour recevoir l'extrémité coupée du câble à fibre optique afin de coopérer avec l'extrémité ouverte de l'élément de terminaison, la seconde extrémité présentant un diamètre intérieur réductible pour sceller le collier tubulaire autour du câble à fibre optique.

13. Procédé de terminaison d'un câble à fibre optique comportant au moins une fibre microstructurée, le procédé comprenant :
la section du câble à fibre optique pour créer une extrémité coupée où les fibres optiques du câble sont exposées ; et
l'utilisation d'un kit selon la revendication 12
pour former un terminateur selon l'une quelconque des revendications 1
à 10 scellé sur l'extrémité coupée du câble à fibre optique.
